# EUROPÄISCHE PATENTSCHRIFT

(11) **EP 3 471 979 B1**
(45) Veröffentlichungstag und Bekanntmachung des Hinweises auf die Patenterteilung: **16.10.2019**
(21) Anmeldenummer: 17728841.2
(22) Anmeldetag: 09.06.2017
(51) Int. Cl.: B60H 1/34, F24F 13/06

(54) **LUFTAUSSTRÖMER**
AIR VENT
DIFFUSEUR D'AIR

(30) Priorität: 15.06.2016 DE 102016110933
(43) Veröffentlichungstag der Anmeldung: 24.04.2019
(73) Patentinhaber: Dr. Schneider Kunststoffwerke GmbH, 96317 Kronach (DE)
(72) Erfinder: GRÜNBECK, Thomas, 96358 Teuschnitz (DE)
(86) Internationale Anmeldenummer: PCT/EP2017/064071
(87) Internationale Veröffentlichungsnummer: WO 2017/216046

(56) Entgegenhaltungen:
- FR-A1- 2 772 311
- JP-U- S60 182 641
- US-A- 4 407 186

## Beschreibung

Es wird ein Luftausströmer, aufweisend ein Gehäuse mit einem Lufteintrittsabschnitt, einem Hauptluftkanal und einem Luftaustrittsabschnitt beschrieben, der als sogenannter lamellenloser Luftausströmer ausgebildet ist. Bei lamellenlosen Luftausströmern erfolgt das Ablenken der ausgegebenen Luft oftmals unter Ausnutzung des Coanda-Effekts, wobei Elemente zur Steuerung der Richtung der ausgegebenen Luft in einem dem Luftaustrittsabschnitt abgewandten Bereich angeordnet sind. Durch eine spezielle Zuführung eines Luftstrahls auf gekrümmte Bereiche erfolgt dabei die gewünschte Luftablenkung.

Derartige Luftausströmer werden beispielsweise in Armaturenbrettern von Kraftfahrzeugen eingesetzt. Darüber hinaus werden Luftausströmer bei verschiedenen Fahrzeugen sowie Schiffen und Flugzeugen verwendet. Luftausströmer können in einem Kraftfahrzeug auch in anderen Bereichen als in einem Armaturenbrett angeordnet sein. Beispielsweise werden Luftausströmer im Bereich B- oder C-Säule angeordnet. Als Luftdüsen ausgebildete Luftausströmer können beispielsweise an einem Fahrzeugdach angeordnet sein.

Aus DE 10 2009 041 532 A1 ist eine Dralleinrichtung für einen Luftausströmer bekannt. Diese Dralleinrichtung weist eine Nabe, eine Verstellachse und ein in der Nabe drehbar gelagertes und sich von der Nabe radial erstreckenden ersten Luftleitelement auf. Das erste Luftleitelement ist durch Drehen der Verstellachse verstellbar. Weiterhin ist wenigstens ein in der Nabe drehbar gelagertes und sich von der Nabe radial erstreckendes zweites Luftleitelement vorhanden. Das erste Luftleitelement weist an seinem der Nabe abgewandten Ende ein Zahnsegment auf, das in ein Zahnsegment eines um die Verstellachse drehbaren Zahnkranzes eingreift und mit diesem zusammenwirkt. Das zweite Luftleitelement weist an seinem der Nabe abgewandten Ende ein Zahnsegment auf, das ebenfalls in ein Zahnsegment des Zahnkranzes eingreift und mit diesem zusammenwirkt. Außerdem weist das erste Luftleitelement ein weiteres Zahnsegment auf, das in ein an die Verstellachse gekoppeltes Zahnsegment eingreift.

Aus FR 2 794 690 A1 ist eine Dralleinrichtung für eine Belüftung in einem Kraftfahrzeug bekannt, die es durch eine besondere Formgestaltung ermöglicht, die Luftzirkulation einfach einzustellen. Es ist ein Gehäuse vorgesehen, das auf zwei sich gegenüberliegenden Seiten offen ist, damit ein Luftstrom durch das Gehäuse führbar ist. Auf der Mittelachse des Gehäuses, parallel zum durchzuführenden Luftstrom, sind im Gehäuse Lamellen angeordnet, die in Ansprache auf ein drehbares Bedienelement sich gegen die Luftströmungsrichtung verstellen lassen.

Aus DE 10 2013 111 175 B3 ist ein Luftausströmer bekannt, der ein Gehäuse mit einer Luftaustrittsöffnung, einem ersten Anschluss an einen Luftzuführkanal und einen durchgehenden Strömungskanal aufweist. Der Strömungskanal ist mindestens an zwei gegenüberliegenden Abschnitten derart gekrümmt ausgebildet, dass sich der Querschnitt des Strömungskanals zu der Luftaustrittsöffnung hin vergrößert und die mindestens zwei Abschnitte Öffnungen aufweisen, welche jeweils in eine hinter den Abschnitten liegende Kammer münden. Die Kammern weisen jeweils einen von dem ersten Anschluss getrennten zweiten Anschluss zum Zuführen oder Abführen von Luft zur Erzeugung von Überdruck und/oder Unterdruck auf.

Nachteilig bei dem aus DE 10 2013 111 175 B3 bekannten Luftausströmer sind die benötigten Einrichtungen zum Erzeugen von Überdruck und/oder Unterdruck. Hierzu müssen gesonderte Einrichtungen angeordnet werden, damit eine gewünschte Luftablenkung erreicht werden kann. Eine Luftablenkung alleine durch die gekrümmten Oberflächen ist nicht möglich. Insbesondere ist es nicht möglich, allein durch die über einen Zuführkanal zugeführte Luft eine Ablenkung erreicht. Die Luft zur Erzeugung von Überdruck in den Kammern kann zwar aus dem Zuführkanal entnommen werden, muss jedoch separat über eine druckerzeugende Vorrichtung geführt werden. Es ist dabei zu beachten, dass die aus dem Zuführkanal entnommene Luft zur Erzeugung von Überdruck nicht den Hauptluftstrom durch den Strömungskanal übermäßig reduziert. Ebenso muss die aus den Kammern abgeführte Luft zur Erzeugung von Unterdruck über eine separate Vorrichtung abgeführt werden.

JP S60 182641 U offenbart einen Luftausströmer mit einem sich vergrößernden primären Luftkanal und zwei gegenüberliegenden sekundären Luftkanälen. Die sekundären Luftkanäle weisen Öffnungen auf, über welche Luft lotrecht zur Hauptachse des primären Luftkanals eingebracht wird. Wesentlich ist hierbei, dass die Krümmung im primären Luftkanal in Luftströmungsrichtung den Öffnungen nachgeschaltet ist. Um eine Ablenkung der über den primären Luftkanal ausgegebenen Luft zu erreichen, wird über einen der beiden sekundären Luftkanäle Luft dem primären Luftkanal zugeführt. Hierzu sind verschwenkbare Klappen vorgesehen, welche die Luftzufuhr von einem Lufthauptkanal zu den sekundären Luftkanälen steuern. Die maximale Ablenkung der ausgegebenen Luft ist bei dem in JP S60-182641 U beschriebenen Luftausströmer sehr gering.

US 4,407,186 A offenbart einen Luftausströmer mit Lamellen zur Luftablenkung und einem Luftkanalabschnitt mit gegenüberliegenden gekrümmten Kanalwänden. Die Kanalwände weisen im Bereich des geringsten Abstands zueinander Freiräume auf, die beim Entlangströmen der Luft Vakuumbereiche ausbilden und damit die Luftablenkung entlang der gekrümmten Kanalwände unterstützen. In einen der Freiräume mündet ein Luftkanal, der über einen Elektromagneten und eine Klappe verschlossen werden kann. Ist die Klappe geöffnet, strömt die Luft entlang der gegenüberliegenden Kanalwand, da über den Freiraum ein Luftstrom zu der Kanalwand ausgegeben wird. Ist die Klappe geschlossen, strömt die Luft entlang dieser Kanalwand, da ein Unterdruck in dem entsprechenden Freiraum erzeugt wird.

FR 2 772 311 A1 offenbart einen Luftausströmer mit einem Hauptluftkanal und einem Nebenluftkanal, wobei über den Nebenluftkanal Luft in den Luftstrom über den Hauptluftkanal eingebracht werden kann. Zusätzlich offenbart FR 2 772 311 A1 einen Belüftungsring, der eine Vielzahl von Lüftungsöffnungen aufweist, die einen gerichteten Luftkanal aufweisen. Durch ein Verdrehen des Belüftungsrings kann die Richtung der über die Lüftungsöffnungen ausgegebenen Luft verändert werden.

Demgegenüber besteht die Aufgabe darin, einen Luftausströmer anzugeben, der unter Ausnutzung des Coanda-Effekts eine Luftablenkung bewirkt, wobei keine zusätzlichen Einrichtungen zum Erzeugen von Unterdruck und/oder Überdruck benötigt werden. Zudem soll ein Luftausströmer angegeben werden, der eine Luftablenkung in sämtliche Richtungen allein durch eine Antriebseinheit bereitstellt.

Diese Aufgabe wird durch einen Luftausströmer mit den in Anspruch 1 angegebenen technischen Merkmalen gelöst. Vorteilhafte Weiterbildungen sind in den Unteransprüchen im Detail angegeben.

Ein Luftausströmer, der die vorstehend genannte Aufgabe löst, weist ein Gehäuse mit einem Lufteintrittsabschnitt, einem Hauptluftkanal und einem Luftaustrittsabschnitt auf, wobei der Hauptluftkanal mindestens zwei gegenüberliegende Abschnitte aufweist, die den Hauptluftkanal ausgehend vom Lufteintrittsabschnitt und ausgehend vom Luftaustrittsabschnitt verkleinern, wobei hinter den Abschnitten mindestens zwei Luftkanäle angeordnet sind, die über Austrittsöffnungen in den Hauptluftkanal münden, wobei im Bereich von Eintrittsöffnungen der Luftkanäle jeweils eine verschwenkbar gelagerte Klappe angeordnet ist, die den Luftkanal in einer unbetätigten Stellung verschließt, wobei zusätzlich mindestens ein Steuerelement und eine Antriebseinheit vorgesehen sind, wobei das mindestens eine Steuerelement mit der Antriebseinheit gekoppelt ist und die Klappen über das mindestens eine Steuerelement verschwenkbar sind.

Das Gehäuse des Luftausströmers kann verschiedene Querschnittsformen aufweisen. So kann der Luftausströmer einen runden, rechteckigen oder polygonalen Querschnitt aufweisen. Der Hauptluftkanal weist jedoch mindestens zwei gegenüberliegende Abschnitte auf, die den Strömungsquerschnitt durch den Hauptluftkanal hindurch zuerst verengen und anschließend wieder vergrößern. Vorzugsweise sind die gegenüberliegenden Abschnitte umlaufend ausgebildet, beispielsweise bei einem runden Luftausströmer.

Die Verengung des Hauptluftkanals bewirkt eine Beschleunigung des Luftstroms. Durch die Verbreiterung des Hauptluftkanals im Luftaustrittsabschnitt erfolgt unter Ausnutzung des Coanda-Effekts eine Luftablenkung, wobei hierzu der Luftaustrittsabschnitt entsprechend gekrümmte Bereiche aufweist. Die Ablenkung des Luftstroms erfolgt jedoch überwiegend über die Luftkanäle, welche im Wesentlichen im Luftaustrittsabschnitt in den Hauptluftkanal münden. Die Luftkanäle weisen ausgehend von den Luftaustrittsöffnungen einen sich verkleinernden Querschnitt auf, so dass auch hierbei eine Beschleunigung des dadurch geführten Luftstroms erfolgt. Damit Luft in die Luftkanäle strömen kann, müssen die schwenkbar gelagerten Klappen, wobei jede Klappe für einen separaten Luftkanal vorgesehen ist, verschwenkt werden. Sind die Klappen nicht verschwenkt, strömt die Luft lediglich durch den Hauptluftkanal und tritt im Wesentlichen ohne Ablenkung aus dem Luftaustrittsabschnitt aus. Wird mindestens eine der Klappen verschwenkt, so strömt Luft über diesen zugehörigen Luftkanal in den Hauptluftkanal und lenkt den Luftstrom durch den Hauptluftkanal ab. Die Krümmung des Luftaustrittsabschnitts unterstützt dabei die Luftablenkung. Um die verschiedenen Klappen zu verschwenken, ist eine einzige Antriebseinheit ausreichend. Beim Stand der Technik ist in der Regel beim Verstellen von Luftleitelementen oder anderen Einrichtungen stets eine separate Antriebseinheit erforderlich.

Bei dem hierin beschriebenen Luftausströmer ist das Steuerelement, welches ein Verschwenken der Klappen bewirkt, mit der Antriebseinheit gekoppelt, so dass ein Verfahren des Steuerelements über die Antriebseinheit automatisch ein Verschwenken der Klappen bewirkt. Hierzu wird die Steuereinheit über die Antriebseinheit bewegt. Das Bewegen überfolgt in der Regel umlaufend, wobei das Steuerelement dabei an den jeweiligen Klappen vorbeigeführt wird. In Abhängigkeit des Strömungsquerschnitts des Luftausströmers wird das Steuerelement dabei im Wesentlichen kreisförmig oder elliptisch bzw. auf einer rechteckigen Führungsbahn bewegt. Bei einer rechteckigen Führungsbahn können die Ecken entsprechend abgerundet sein, wobei entsprechende Führungen oder Führungshilfen vorgesehen sein können. Dies ermöglicht ein Verschwenken von Klappen, die beispielsweise gegenüberliegend angeordnet sind, mit einem einzigen Steuerelement und einer einzigen Antriebseinheit. In weiteren Ausführungsformen kann eine Vielzahl von Klappen vorgesehen sein, welche jeweils entsprechende Luftkanäle verschließen.

Das mindestens eine Steuerelement kann an einem Steuerglied angeordnet sein. Das Steuerglied kann beispielsweise bei einem Luftausströmer mit einem sehr breiten und rechteckigen Strömungsquerschnitt durch eine Kette, ein Seil oder ein anderes flexibles Element gebildet sein. Dieses wird über entsprechende Führungen herumgeführt und bewirkt dabei in Abhängigkeit der Position des Steuerelementes ein Verschwenken der in diesem Bereich angeordneten Klappen. Führungshilfen zur Führung einer Kette, eines Seils oder eines anderen flexiblen Elements können Zahnräder, Ritzel, Führungsrollen oder ähnliches sein.

Anstelle eines einzelnen Steuerelementes können selbstverständlich auch zwei, drei oder mehr Steuerelemente an einem Steuerglied angeordnet sein. Hierdurch ist es möglich, mehrere Klappen gleichzeitig zu verschwenken. Darüber hinaus ist es möglich - in Abhängigkeit der Ausbildung der Steuerelemente - eine Klappe vollständig zu verschwenken, wobei mindestens eine zweite Klappe nur teilweise verschwenkt wird. Der Zustand der jeweiligen Klappen hängt dabei von der Position der Steuerelemente und deren Abstand zueinander ab.

Das Steuerglied kann in weiteren Ausführungsformen ringförmig ausgebildet sein und zwei Steuerelemente aufweisen, die beabstandet zueinander angeordnet sind. Eine ringförmige Ausbildung des Steuergliedes kann beispielsweise als Nockenscheibe erfolgen, wobei an der Nockenscheibe zwei als Nocken ausgebildete Steuerelemente angeordnet sind. Ein ringförmiges Steuerglied kann beispielsweise bei Luftausströmern mit einem runden Querschnitt verwendet werden.

Das Steuerglied kann zusätzlich einen umlaufenden Zahnradabschnitt aufweisen, der mit der Antriebseinheit gekoppelt ist. Der Zahnradabschnitt steht beispielsweise kämmend mit einem Antriebsrad eines Elektromotors in Verbindung. Hierdurch ist es möglich, durch eine Bedienung mittels Tasteneingabe oder Bedienung anderer Stellelemente ein Ändern der Richtung der ausgegebenen Luft über den Luftausströmer motorisch zu erreichen. Dabei ist nur ein einziger Elektromotor erforderlich und es kann ein Endlosbetrieb erreicht werden. Das bedeutet, dass kein Vor- und Zurückfahren des Elektromotors erfolgen muss, sondern dieser in nur einer Drehrichtung betätigt werden kann. Darüber hinaus ist es möglich, verschiedene Ausströmmodi einzustellen. Beispielsweise kann eine sogenannte Ventilatorfunktion erreicht werden, wobei der Elektromotor das Steuerglied permanent bewegt, so dass eine zirkulierende Luftablenkung erfolgt.

In weiteren Ausführungsformen sind die Klappen jeweils mit einer Federeinrichtung gekoppelt und die Federeinrichtungen drücken die Klappen in ihre Ausgangsstellung Die Federeinrichtungen sorgen dafür, dass nach einem Verschwenken der Klappen diese wieder automatisch in ihre Ausgangsstellung zurückgeführt werden, nachdem das Steuerelement, beispielsweise eine Nocke, die entsprechende Klappe passiert hat. Als Federeinrichtungen können beispielsweise Schenkelfedern verwendet werden, wobei die Schenkel sich entsprechend an den Flächen eines Gehäuses und der Fläche einer Klappe abstützen.

Die Klappen weisen in weiteren Ausführungsformen jeweils einen Schwenkarm auf, der von den Klappen absteht. Der Schwenkarm dient zum Verschwenken der Klappen, wobei ein Steuerelement beim Vorbeifahren eine Verlagerung des Schwenkarms und damit ein Verschwenken der Klappen bewirkt. Die Anordnung des Schwenkarms an den Klappen hängt von der Ausbildung des Luftausströmers und der Ausbildung des Steuerelementes ab. Vorzugsweise sind die Schwenkarme so angeordnet, dass diese nicht direkt in den Hauptluftkanal bzw. diesem zugewandt ausgerichtet sind und ein Steuerglied, beispielsweise eine Nockenscheibe, außerhalb des Hauptluftkanals und der den Hauptluftkanal umgebenden Luftkanäle geführt ist.

In weiteren Ausführungsformen weist das mindestens eine Steuerelement mindestens eine Anlaufschräge oder einen Kurvenabschnitt und einen parallel zu einer Grundfläche verlaufenden Abschnitt auf. Die Grundfläche wird durch die Klappenfläche definiert. Über die Anlaufschräge oder den Kurvenabschnitt wird beim Überfahren des Steuerelementes der Klappe, welche beispielsweise einen Schwenkarm aufweist, ein langsames Öffnen durch Verschwenken der Klappe bewirkt, wobei über den parallel zur Grundfläche verlaufenden Abschnitt sich die Klappe im maximal verschwenkten Zustand befindet. Anschließend kann wieder eine Anlaufschräge oder ein Kurvenabschnitt an dem Steuerelement vorgesehen sein, so dass es zu einem kontinuierlichen und langsamen Schließen des entsprechenden Luftkanals durch Verschwenken der Klappe kommt.

In einer weiteren Ausführungsform ist ein Schwenkarm zu einer Klappe nach außen hin unter einem Winkel > 90° angeordnet und der Abstand der Anlaufschrägen oder Kurvenabschnitte zweier Steuerelemente an einem ringförmigen Steuerglied, an dem die Steuerelemente angeordnet sind, beträgt 76°. In einer solchen Ausführungsform, die bspw. für einen runden Luftausströmer vorgesehen ist, weist der Luftausströmer vier Luftkanäle auf, die einen runden Hauptluftkanal umgeben. Über die beiden Steuerelemente an dem ringförmigen Steuerglied und dem entsprechenden Abstand der Anlaufschrägen, können wesentliche Steuerrungen der Klappen erreicht werden, wobei eine Neutralstellung mit nicht verschwenkten Klappen, ein Verschwenken aller Klappen einzeln sowie ein vollständiges Verschwenken einer Klappe zusammen mit einem teilweisen Verschwenken einer daneben liegenden Klappe möglich sind. Dies ist für alle vier Klappen in jeder Kombination möglich.

In weiteren Ausführungsformen, wobei mehr oder weniger Klappen vorgesehen sind, können bei einem runden Luftausströmer andere Winkelabstände erforderlich sein. Die Winkelabstände hängen selbstverständlich auch von der Ausbildung der Steuerelemente bzw. der Nocken einer Nockenscheibe ab.

In weiteren Ausführungsformen weist der Hauptluftkanal einen kreisförmigen Querschnitt auf und die gegenüberliegenden Abschnitte bilden eine umlaufende Verengung im Hauptluftkanal. Zusätzlich umgeben in dieser bevorzugten Ausführungsform mindestens vier Luftkanäle den Hauptluftkanal und münden über ihre Austrittsöffnungen in den Hauptluftkanal.

In weiteren Ausführungsformen weist die Antriebseinheit einen Elektromotor auf. Der Elektromotor kann beispielsweise über ein Antriebsritzel mit einem verzahnten, umlaufenden Abschnitt einer Nockenscheibe bzw. eines Steuerglieds in Eingriff stehen.

In noch weiteren Ausführungsformen kann ein Zahnradabschnitt einer Nockenscheibe bzw. eines Steuerglieds mit einer entsprechenden mechanischen Kopplung durch ein Bedienrad betätigt werden.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine perspektivische Darstellung eines Luftausströmers;
- Fig. 2: eine weitere perspektivische Darstellung des Luftausströmers von Fig. 1;
- Fig. 3: eine perspektivische Darstellung eines vorderen Gehäuseteils des Luftausströmers von Fig. 1;
- Fig. 4: eine schematische Schnittansicht des Luftausströmers von Fig. 1;
- Fig. 5: eine perspektivische Darstellung des vorderen Gehäuseteils des Luftausströmers von Fig. 1 mit daran verschwenkbar gelagerten Klappen;
- Fig. 6: eine perspektivische Darstellung des vorderen Gehäuseteils des Luftausströmers von Fig. 1 mit verschwenkbar gelagerten Klappen, einer als Steuerglied ausgebildeten Nockenscheibe mit als Steuerelemente daran angeordneten Nocken und einem Antriebsrad;
- Fig. 7: eine perspektivische Darstellung der Klappen und des Antriebsrades des Luftausströmers von Fig. 1;
- Fig. 8: eine perspektivische Darstellung der Klappen, der Nockenscheiben und des Antriebsrads des Luftausströmers von Fig. 1;
- Fig. 9: eine perspektivische Darstellung der Nockenscheibe mit zwei Nocken des Luftausströmers von Fig. 1; und
- Fig. 10: eine weitere perspektivische Darstellung der Klappen und der Nockenscheibe des Luftausströmers von Fig. 1.

In den Zeichnungen mit gleichen Bezugszeichen versehene Teile entsprechen im Wesentlichen einander, sofern nichts anderes angegeben ist. Darüber hinaus wird darauf verzichtet, Bestandteile zu beschreiben, welche nicht wesentlich zum Verständnis der hierin offenbarten technischen Lehre sind.

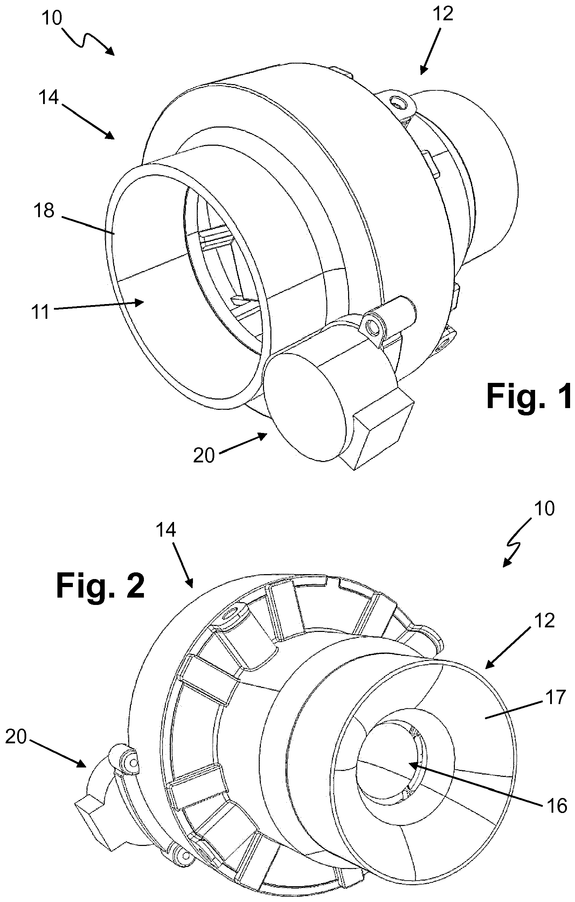

Die Fig. 1 bis 10 zeigen eine beispielhafte Ausbildung eines Luftausströmers 10 der hierin beschriebenen Lehre. Die gezeigte Ausführungsform dient jedoch nicht dazu, die offenbarte Lehre einzuschränken.

Fig. 1 zeigt eine perspektivische Darstellung eines Luftausströmers 10. Der Luftausströmer 10 weist in dieser Ausführungsform ein vorderes Gehäuseteil 12 und ein hinteres Gehäuseteil 14 auf. An dem hinteren Gehäuseteil 14 ist eine Antriebseinheit 20 angeordnet, die einen Elektromotor aufweist. Der Elektromotor ist über ein Antriebsrad 44 mit einem Zahnradabschnitt 38 und einer Nockenscheibe 36 verbunden.

Das hintere Gehäuseteil 14 weist einen Anschluss 18 auf. Über den Anschluss 18 erfolgt eine Anbindung an einen Luftzuführkanal in einem Belüftungssystem eines Fahrzeugs. Über den Anschluss 18 wird dem Luftausströmer 10 beispielsweise Luft von einer Klimaanlage zugeführt. An den Anschluss 18 schließt sich ein Lufteintrittsabschnitt 11 an, über welchen die zugeführte Luft in den Luftausströmer 10 gelangt.

Fig. 2 zeigt eine weitere perspektivische Darstellung des Luftausströmers 10. Fig. 2 zeigt die Frontansicht auf den Luftausströmer 10 und das vordere Gehäuseteil 12. Das vordere Gehäuseteil 12 ist mit dem hinteren Gehäuseteil 14 fest verbunden, so dass es zu keinem Luftaustritt zwischen den beiden Gehäuseteilen 12 und 14 kommt. Das vordere Gehäuseteil 12 weist eine Austrittsöffnung 16 auf, die sich in einem Luftaustrittsabschnitt 17 befindet. Der Luftaustrittsabschnitt 17 ist gekrümmt ausgebildet, so dass eine Luftablenkung unter Ausnutzung des Coanda-Effekts erreicht werden kann.

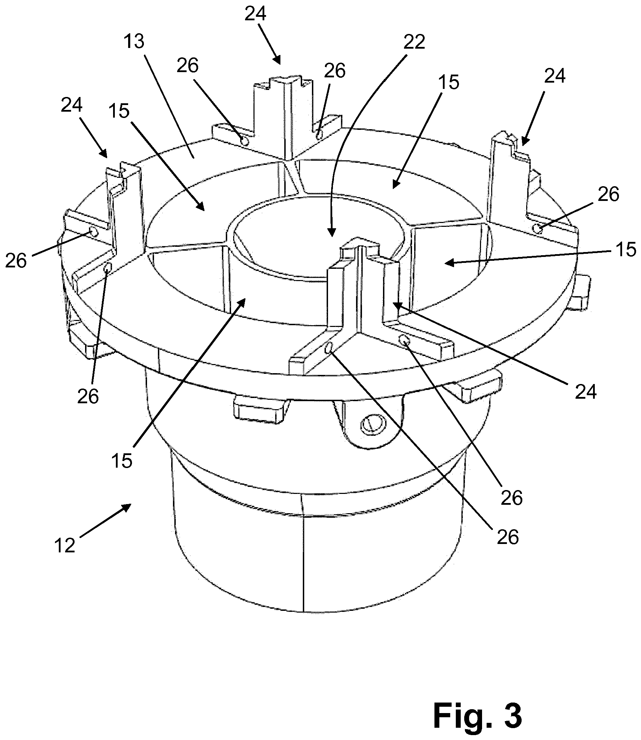

Fig. 3 zeigt eine perspektivische Darstellung des vorderen Gehäuseteils 12 des Luftausströmers 10. Das Gehäuseteil 12 weist einen Ring 13 auf. An dem Ring 13 sind Lagerstege 24 angeordnet. Die Lagerstege 24 weisen Öffnungen 26 auf. Über die Öffnungen 26 werden Lagerwellen 30 von Klappen 28 gehalten. Die Klappen 28 sind über die Lagerwellen 30 drehbar in den Öffnungen 26 gelagert. Der Ring 13 umgibt vier Luftkanäle 15 und einen zentralen Luftkanal 22, der als Hauptluftkanal dient. Die Luftkanäle 15 sind im Wesentlichen gleich ausgebildet und umgeben den Hauptluftkanal bzw. den Luftkanal 22. In die Luftkanäle 15 kann in Abhängigkeit der Stellung der Klappen 28 Luft eingebracht werden, die über vordere Austrittsöffnungen der Luftkanäle 15 in den Luftkanal 22 strömt und damit eine Luftablenkung bewirkt.

Die Lagerstege 24 weisen an ihrem oberen Ende Einschnitte auf, die zusammen eine drehbare Lagerung für die Nockenscheibe 36 bereitstellen.

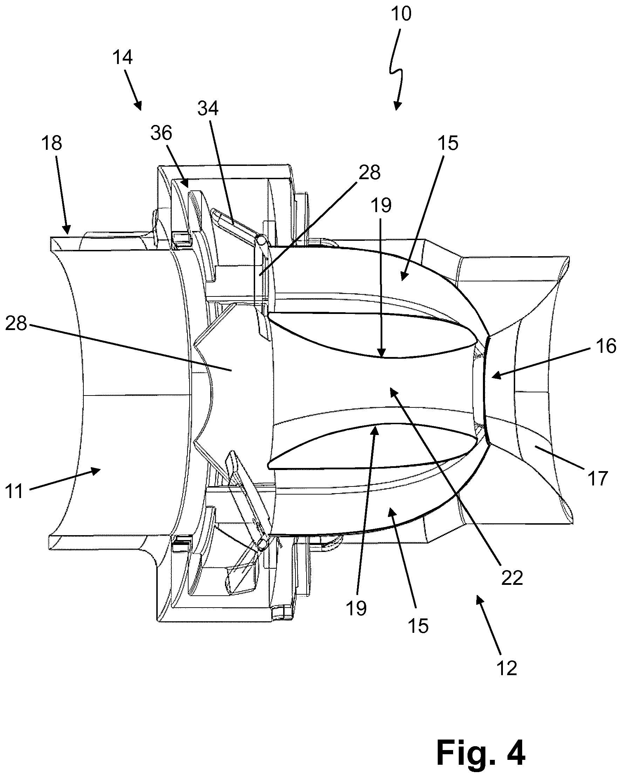

Fig. 4 zeigt eine schematische Schnittansicht des Luftausströmers 10 ohne Schraffierungen. Bei der in Fig. 4 gezeigten Ansicht ist eine Klappe 28 vollständig verschwenkt und eine benachbarte Klappe 28 teilweise verschwenkt. Das Verschwenken der Klappen 28 erfolgt in Abhängigkeit der Position von Nocken 40, die an der Nockenscheibe 36 angeordnet sind. Die Nocken 40 drücken hierzu gegen Schwenkhebel 34, die an den Klappen 28 angeordnet sind.

Wie in Fig. 4 dargestellt, weist der Luftkanal 22 Abschnitte 19 auf, die den Luftkanal 22 ausgehend vom Lufteintrittsabschnitt 11 verengen und sich zu dem Luftaustrittsabschnitt 17 hin wieder vergrößern. Die Luftkanäle 15 weisen einen sich zu dem Luftaustrittsabschnitt 17 hin verkleinernden Strömungsquerschnitt auf. Hierüber wird eine Beschleunigung der eintretenden Luft über Eintrittsöffnungen, die über die Klappen 28 verschlossen werden können, erreicht. Die Luftkanäle 15 münden über Austrittsöffnungen in den Luftkanal 22. Wird über einen der Luftkanäle 15 Luft in den Luftkanal 22 gebracht, wird der resultierende Luftstrom aus dem Luftkanal 15 und dem Luftkanal 22 entsprechend abgelenkt. Der aus einem der Luftkanäle 15 austretende Luftstrom "drückt" den Luftstrom aus dem Luftkanal 22 dabei entsprechend nach oben oder unten bzw. zur Seite. Der abgelenkte Luftstrom, bestehend aus dem Luftstrom aus dem Luftkanal 22 und mindestens einem Luftkanal 15, strömt dann unter Ausnutzung des Coanda-Effekts entlang der gekrümmten Bereiche des Luftaustrittsabschnitts 17 und folgt der Krümmung, so dass ein gerichteter Luftstrom aus dem Luftausströmer 10 ausgegeben wird.

Bei dem Luftausströmer 10 kann über die Nockenscheibe 36 mit den beiden Nocken 40 sowohl ein Verschwenken einer Klappe 28 als auch ein vollständiges Verschwenken einer Klappe 28 zusammen mit einem teilweisen Verschwenken einer benachbarten Klappe 28 erreicht werden. Zudem ist der Luftausströmer 10 rund ausgebildet und der Luftkanal 22 weist einen runden Querschnitt auf, so dass eine Luftablenkung in jede Richtung möglich ist. Die Abschnitte 19 sind Teil einer umlaufenden Verengung des Luftkanals. Dies unterstützt zugleich die Ablenkung der ausströmenden Luft in jede beliebige Richtung. Damit eine noch weitere und feinere Aufteilung von ausströmender Luft möglich ist, können in weiteren nicht dargestellten Ausführungsformen mehrere Luftkanäle 15 und entsprechend mehrere Klappen 28 vorgesehen sein.

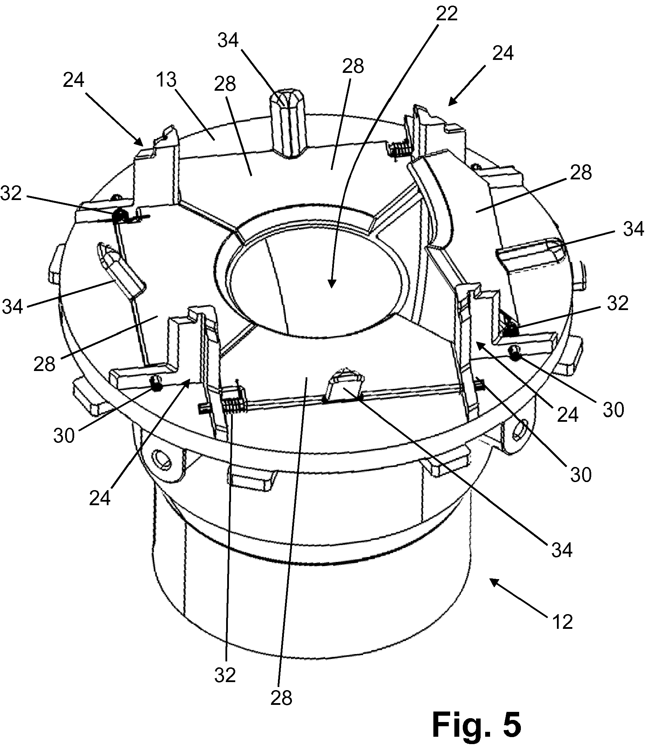

Fig. 5 zeigt eine perspektivische Darstellung des vorderen Gehäuseteils 12 des Luftausströmers 10 mit daran verschwenkbar gelagerten Klappen 28. Wie in Fig. 5 dargestellt, ist nur eine Klappe 28 verschwenkt, wobei hierzu eine nicht dargestellte Nocke 40 gegen den Schwenkhebel 34 drückt.

Die Klappen 28 sind so ausgebildet, dass diese die Eintrittsöffnungen der Luftkanäle 15 vollständig verschließen, aber den Luftkanal 22 freilassen. Zudem sind die Klappen 28 an den den Luftkanal 22 umgebenden Abschnitten abgerundet ausgebildet, so dass zugeführte Luft nicht verwirbelt wird.

Die Klappen 28 sind über Lagerwellen 30 in den Öffnungen 26 der Lagerstege 24 gelagert und weisen jeweils eine Schenkelfeder 32 auf. Die Schenkel der Schenkelfeder 32 stützen sich an einem Ende an dem Ring 13 und an dem anderen Ende gegen die Fläche der Klappen 28 ab. Hierdurch wird nach einem Verschwenken der Klappen 28 ein automatisches Zurückführen der Klappen 28 in ihre Ausgangsstellung erreicht, in welcher die Klappen 28 die Luftkanäle 15 verschließen.

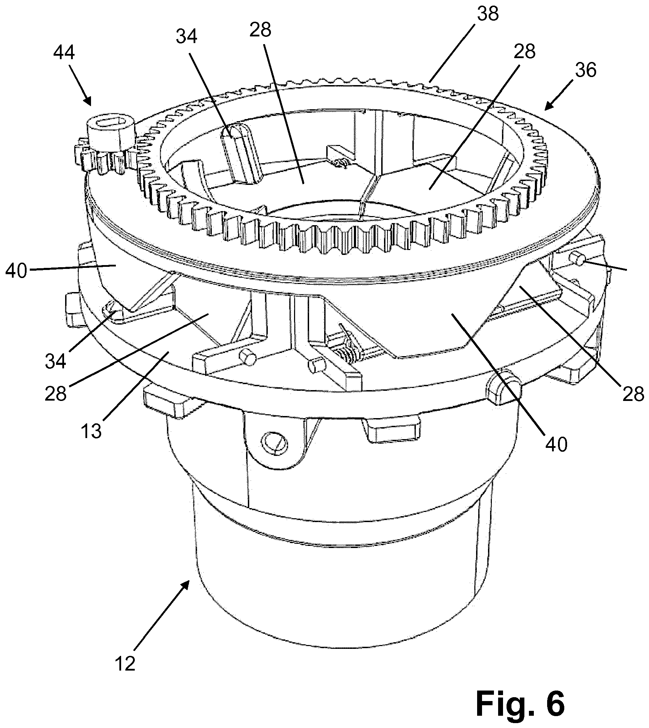

Fig. 6 zeigt eine perspektivische Darstellung des vorderen Gehäuseteils 12 des Luftausströmers 10 mit verschwenkbar gelagerten Klappen 28, einer als Steuerglied ausgebildeten Nockenscheibe 36 mit als Steuerelemente daran angeordneten Nocken 40 und einem Antriebsrad 44. Die Zähne des Antriebsrads 44 kämmen mit den Zähnen des Zahnradabschnitts 38 der Nockenscheibe 36. Das Antriebsrad 44 ist mit dem Elektromotor der Antriebseinheit 20 gekoppelt, so dass ein Verdrehen des Antriebsrads 44 ein Verdrehen der Nockenscheibe 36 bewirkt.

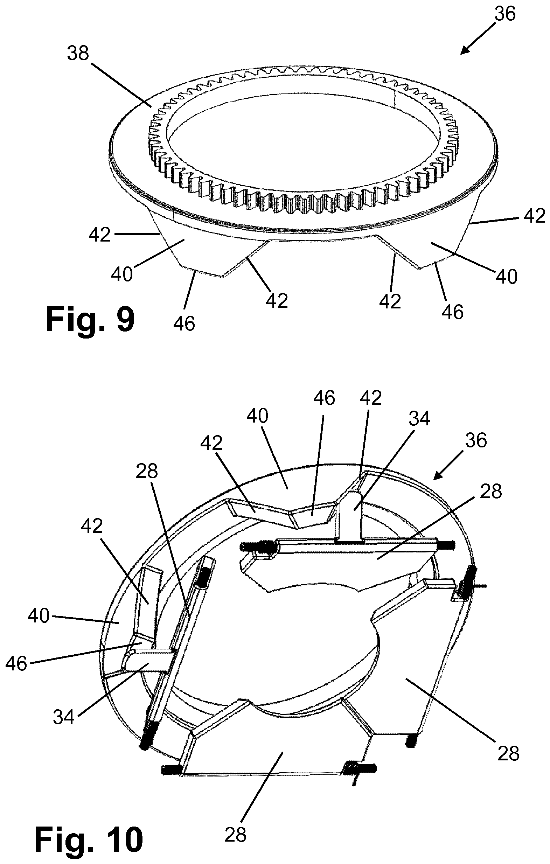

Die Nockenscheibe 36 weist zwei Nocken 40 auf, die Anlaufschrägen 42 aufweisen. Gelangt eine der Anlaufschrägen 42 in Kontakt mit einem der Schwenkhebel 34, so erfolgt ein Verschwenken der zugehörigen Klappe 28. Der Abstand zweier in die gleiche Richtung zeigender Anlaufschrägen 42 der Nocken 40 beträgt bei der in den Figuren gezeigten Ausführung eines Luftausströmers 10 76°. Hierdurch ist es möglich, eine Klappe 28 vollständig zu verschwenken und gleichzeitig eine zweite benachbarte Klappe 28 zu öffnen, wobei die benachbarte Klappe 28 nur teilweise verschwenkt wird. Insbesondere kann durch die gezeigte Ausbildung der Nocken 40 mit den gezeigten Anlaufschrägen 42 und den Abschnitten 46 (siehe Fig. 9) auch nur ein Öffnen einer Klappe 28 erreicht werden. Weiter ist es möglich, während der Öffnung einer Klappe 28 durch Verschwenken kontinuierlich eine benachbarte zweite Klappe 28 zu verschwenken, bis diese vollständig geöffnet ist, wobei dann die zuvor vollständig verschwenkte Klappe 28 teilweise verschwenkt oder nicht mehr verschwenkt ist. Anschließend gleitet der Schwenkhebel 34 der ursprünglich geöffneten Klappe 28 an der zweiten Anlaufschräge 42 der Nocke 40 entlang und bewirkt ein Verschwenken der entsprechenden Klappe 28 zurück in ihren Ausgangszustand, wodurch der korrespondierende Luftkanal 15 verschlossen wird.

Die verschiedenen verschwenkten Stellungen zweier benachbarter Klappen 28 und das gleichzeitige Verschwenken einer Klappe 28 und ein Schließen eines Luftkanals 15 durch eine benachbarte Klappe 28 werden durch die Abschnitte 46 möglich. In Abhängigkeit der Position der Nocken 40 befinden sich die Schwenkhebel 34 an einer vorderen Position des Abschnitts 46, an einer mittleren Position des Abschnitts 46 oder einer hinteren Position des Abschnitts 46 bzw. befinden sich dann im Bereich der Anlaufschrägen 42 oder haben diese passiert.

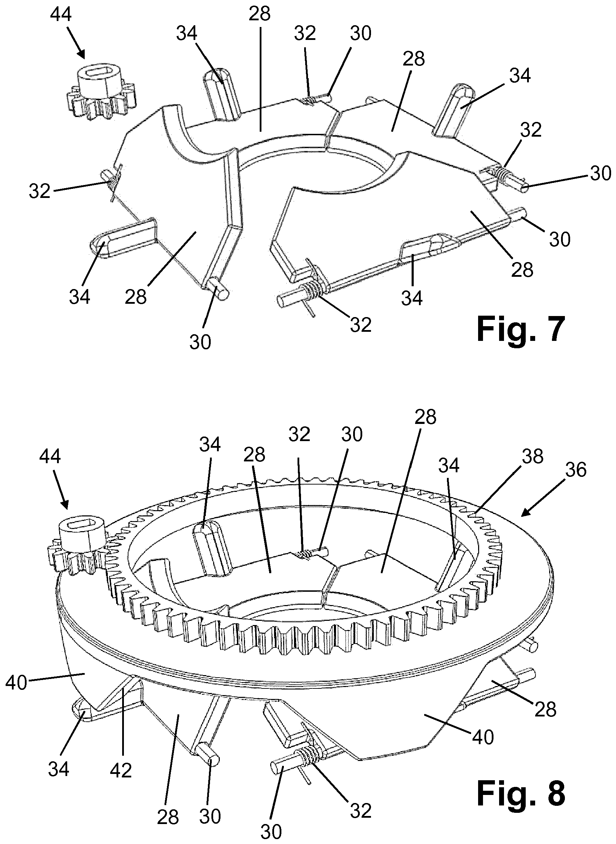

Fig. 7 zeigt eine perspektivische Darstellung der Klappen 28 und des Antriebsrads 44 des Luftausströmers 10. Fig. 7 zeigt den Zustand der teilweise verschwenkten Klappe 28 und der vollständig verschwenkten Klappe 28 der in Fig. 6 gezeigten Stellung. Die Klappe 28, welche vollständig verschwenkt worden ist (linke Klappe 28) schließt zwischen ihrer oberen Seite und dem Ring 13 (in Fig. 7 nicht dargestellt) einen Winkel von > 90° ein. Dies liegt an der Anordnung des Schwenkhebels 34, der ebenfalls zu der oberen Seite der Klappe 28 unter einem Winkel > 90° daran befestigt ist. In der vollständig verschwenkten Stellung der Klappe 28 liegt der Schwenkhebel 34 auf dem Ring 13 auf. Ein weiteres Verschwenken ist daher nicht möglich. Zudem bestimmt die Ausbildung der Nocken 40 inwieweit ein Verschwenken des Schwenkhebels 34 erfolgt. Dies hängt ganz von der Ausführungsform und den gewünschten möglichen Luftablenkungen von Luftausströmern ab. In weiteren Ausführungsformen können andere Winkel zwischen den Schwenkhebeln 34 und den Klappen 28 vorgesehen sein. Zusätzlich ist die maximale Verschwenkbarkeit der Klappen 28 für den in den Figuren gezeigten Luftausströmer 10 ausreichend, da die Weite des Anschlusses 18 und damit des Luftzuführabschnitts 11 entsprechend kleiner ist als der Durchmesser des Rings 13 (siehe Fig. 4).

Fig. 8 zeigt eine perspektivische Darstellung der Klappen 28, der Nockenscheibe 36 und des Antriebsrads 44 des Luftausströmers 10. Wie in Fig. 8 dargestellt, befindet sich die linke Nocke 40 mit ihrem ebenen, parallel zur umlaufenden Ringfläche der Nockenscheibe 36 erstreckenden Abschnitt 46 über dem Schwenkhebel 34. Der Schwenkhebel 34 wird hierdurch vollständig auf den Ring 13 gedrückt. Der Schwenkhebel 34 der benachbarten rechts davon angeordneten Klappe 28 wird über die Anlaufschräge 42 der rechten Nocke 40 (siehe auch Fig. 7) leicht nach unten gedrückt, so dass diese Klappe 28 bereits leicht verschwenkt ist.

Wie schnell die Klappen 28 verschwenkt werden hängt u. a. von der Ausbildung der Anlaufschrägen 42 ab. Weisen diese einen steileren Verlauf auf, so erfolgt ein schnelleres Verschwenken der Klappen 28. Die Breite der Abschnitte 46 der jeweiligen Nocken 40, wie in Fig. 9 dargestellt, bestimmt, wie weit zwei Klappen 28 gleichzeitig verschwenkt werden können. Entscheidend sind hierbei der Abstand der beiden Nocken 40 sowie die Breite der Abschnitte 46 und die Ausbildung der Anlaufschrägen 42. Anstelle von Anlaufschrägen 42 sind in weiteren Ausführungsformen auch kurvenartige Anlaufschrägen vorgesehen, wobei diese konvexe und/oder konkave Krümmungen aufweisen, welche ein entsprechend langsames oder schnelles Verschwenken der Klappen 28 bewirken.

Die Ausbildung der Nockenscheibe 36 bei dem in den Figuren gezeigten Luftausströmer 10 ermöglicht ein vollständiges Verschwenken jeder Klappe 28 einzeln und ein Verschwenken zweier benachbarter Klappen 28 in unterschiedlichen Verschwenkpositionen zueinander. Dies wird durch die versetzte Anordnung der beiden Nocken 40 sowie des versetzten Beginns, beispielsweise der beiden rechts befindlichen Anlaufschrägen 42, um 76° erreicht.

Fig. 10 zeigt eine weitere perspektivische Darstellung der Klappen 28 und der Nockenscheibe 36 des Luftausströmers 10 mit Blick von unten. Die Darstellung von Fig. 10 verdeutlicht das gleichzeitige Verschwenken zweier Klappen 28, wobei eine Klappe 28 über ihren Schwenkhebel 34 vollständig verschwenkt ist, und die andere Klappe 28 nur leicht verschwenkt ist. Bei der linken Klappe 28 wird der Schwenkhebel 34 über den Abschnitt 46 der Nocke 40 vollständig nach unten gedrückt.

Der daneben befindliche Schwenkhebel 34 der Klappe 28 befindet sich im Bereich einer Anlaufschräge 42 und ist daher nicht vollständig nach unten gedrückt. Dementsprechend befindet sich die dazugehörige Klappe 28 in einer nicht vollständig verschwenkten Stellung. Die anderen beiden Klappen 28 sind nicht verschwenkt, da deren Schwenkhebel 34 nicht durch eine Nocke 40 nach unten gedrückt werden. Ferner bewirken die Schenkelfedern 32 ein Verbleiben der Klappen 28 in deren Position.

Der Luftausströmer 10 ermöglicht über eine einzige Antriebseinheit ein Verschwenken der Klappen 28 und damit die Bereitstellung eines Luftstroms über einen lamellenlosen Luftausströmer in sämtliche Richtungen. Gegenüber bekannten Luftausströmern aus dem Stand der Technik sind daher keine Ablenkmittel wie Lamellen oder sonstiges erforderlich. Zusätzlich wird ein lamellenloser Luftausströmer 10 bereitgestellt, der keine Mehrzahl an Antriebseinheiten oder Mittel zum Bereitstellen von Überdruck und/oder Unterdruck benötigt.

### Bezugszeichenliste

- 10: Luftausströmer
- 11: Lufteintrittsabschnitt
- 12: Gehäuseteil
- 13: Ring
- 14: Gehäuseteil
- 15: Luftkanal
- 16: Austrittsöffnung
- 17: Luftaustrittsabschnitt
- 18: Anschluss
- 19: Abschnitt
- 20: Antriebseinheit
- 22: Luftkanal
- 24: Lagersteg
- 26: Öffnung
- 28: Klappe
- 30: Lagerwelle
- 32: Schenkelfeder
- 34: Schwenkhebel
- 36: Nockenscheibe
- 38: Zahnradabschnitt
- 40: Nocke
- 42: Anlaufschräge
- 44: Antriebsrad
- 46: Abschnitt

## Patentansprüche

1. Luftausströmer, aufweisend ein Gehäuse mit einem Lufteintrittsabschnitt (11), einem Hauptluftkanal und einem Luftaustrittsabschnitt (17), wobei der Hauptluftkanal mindestens zwei gegenüberliegende Abschnitte (19) aufweist, die den Hauptluftkanal ausgehend vom Lufteintrittsabschnitt (11) und ausgehend vom Luftaustrittsabschnitt (17) verkleinern, wobei hinter den Abschnitten (19) mindestens zwei Luftkanäle (15) angeordnet sind, die über Austrittsöffnungen in den Hauptluftkanal münden, wobei im Bereich von Eintrittsöffnungen der Luftkanäle (15) jeweils eine verschwenkbar gelagerte Klappe (28) angeordnet ist, die den Luftkanal (15) in einer unbetätigten Stellung verschließt, weiter aufweisend mindestens ein Steuerelement und eine Antriebseinheit (20), wobei das mindestens eine Steuerelement mit der Antriebseinheit (20) gekoppelt ist und die Klappen (28) über das mindestens eine Steuerelement verschwenkbar sind.

2. Luftausströmer nach Anspruch 1, wobei das mindestens eine Steuerelement an einem Steuerglied angeordnet ist.

3. Luftausströmer nach Anspruch 2, wobei das Steuerglied ringförmig ausgebildet ist und zwei Steuerelemente aufweist, die beabstandet zueinander angeordnet sind.

4. Luftausströmer nach Anspruch 3, wobei das Steuerglied einen umlaufenden Zahnradabschnitt (38) aufweist, der mit der Antriebseinheit (20) gekoppelt ist.

5. Luftausströmer nach einem der Ansprüche 1 bis 4, wobei die Klappen (28) jeweils mit einer Federeinrichtung gekoppelt sind und die Federeinrichtungen die Klappen (28) in ihre Ausgangsstellung drücken.

6. Luftausströmer nach einem der Ansprüche 1 bis 5, wobei die Klappen (28) einen Schwenkarm aufweisen, der von den Klappen (28) absteht.

7. Luftausströmer nach einem der Ansprüche 1 bis 6, wobei das mindestens eine Steuerelement mindestens eine Anlaufschräge (42) oder Kurvenabschnitt und einen parallel zu einer Grundfläche verlaufenden Abschnitt (46) aufweist.

8. Luftausströmer nach Anspruch 7, wobei ein Schwenkarm zu einer Klappe (28) nach außen hin unter einem Winkel größer 90° angeordnet ist und der Abstand der Anlaufschrägen (42) oder der Kurvenabschnitte zweier Steuerelemente an einem ringförmigen Steuerglied, an dem die Steuerelemente angeordnet sind, sechsundsiebzig Grad beträgt.

9. Luftausströmer nach einem der Ansprüche 1 bis 8, wobei
- der Hauptluftkanal einen kreisförmigen Querschnitt aufweist und die gegenüberliegenden Abschnitte (19) eine umlaufende Verengung im Hauptluftkanal bilden, und
- mindestens vier Luftkanäle (15) den Hauptluftkanal umgeben und über Austrittsöffnungen in den Hauptluftkanal münden.

10. Luftausströmer nach einem der Ansprüche 1 bis 9, wobei die Antriebseinheit (20) einen Elektromotor aufweist.

## Claims

1. Air vent comprising a housing with an air inlet section (11), a main air channel and an air outlet section (17), wherein the main air channel has at least two opposite sections (19) which reduce the size of the main air channel starting from the air inlet section (11) and from the air outlet section (17), wherein at least two air channels (15) which open by way of outlet openings into the main air channel are arranged behind the sections (19) and wherein a respective pivotably mounted flap (28) which in an unactuated setting closes the air channel (15) is arranged in the region of inlet openings of the air channels (15), and further comprising at least one control element and a drive unit (20), the at least one control element being coupled with the drive unit (20) and the flaps (28) being pivotable by way of the at least one control element.

2. Air vent according to claim 1, wherein the at least one control element is arranged at a control member.

3. Air vent according to claim 2, wherein the control member is of annular construction and comprises two control elements arranged at a spacing from one another.

4. Air vent according to claim 3, wherein the control element has an encircling gearwheel section (38) coupled with the drive unit (20).

5. Air vent according to any one of claims 1 to 4, wherein the flaps (28) are each coupled with a spring device and the spring devices urge the flaps (28) into the starting setting thereof.

6. Air vent according to any one of claims 1 to 5, wherein the flaps (28) have a pivot arm protruding from the flaps (28).

7. Air vent according to any one of claims 1 to 6, wherein the at least one control element has at least one lobe chamfer (42) or cam section and a section (46) extending parallel to a base surface.

8. Air vent according to claim 7, wherein a pivot arm is arranged with respect to a flap (28) outwardly at an angle greater than 90° and the spacing of the lobe chamfers (42) or the cam sections of two control elements at an annular control member at which the control elements are arranged is seventy-six degrees.

9. Air vent according to any one of claims 1 to 8, wherein
- the main air channel has a circular cross-section and the opposite sections (19) form an encircling constriction in the main air channel and
- at least four air channels (15) surround the main air channel and open into the main air channel by way of outlet openings.

10. Air vent according to any one of claims 1 to 9, wherein the drive unit (20) comprises an electric motor.

## Revendications

1. Diffuseur d'air, présentant un boîtier avec une section d'entrée d'air (11), un canal d'air principal et une section de sortie d'air (17), dans lequel le canal d'air principal présente au moins deux sections (19) se faisant face qui réduisent le canal d'air principal en partant de la section d'entrée d'air (11) et en partant de la section de sortie d'air (17), dans lequel sont disposés après les sections (19) au moins deux canaux d'air (15) qui débouchent dans le canal d'air principal par l'intermédiaire d'ouvertures de sortie, dans lequel est disposé, dans la zone d'ouvertures d'entrée des canaux d'air (15), respectivement un clapet (28) monté de manière à pouvoir pivoter, qui ferme le canal d'air (15) dans une position non actionnée, présentant par ailleurs au moins un élément de commande et une unité d'entraînement (20), dans lequel l'au moins un élément de commande est couplé à l'unité d'entraînement (20) et les clapets (28) peuvent pivoter par l'intermédiaire de l'au moins un élément de commande.

2. Diffuseur d'air selon la revendication 1, dans lequel l'au moins un élément de commande est disposé au niveau d'un organe de commande.

3. Diffuseur d'air selon la revendication 2, dans lequel l'organe de commande est réalisé de manière à présenter une forme annulaire et présente deux éléments de commande qui sont disposés de manière espacée l'un par rapport à l'autre.

4. Diffuseur d'air selon la revendication 3, dans lequel l'organe de commande présente une section de roue dentée (38) périphérique qui est couplée à l'unité d'entraînement (20).

5. Diffuseur d'air selon l'une quelconque des revendications 1 à 4, dans lequel les clapets (28) sont couplés respectivement à un dispositif de ressort et les dispositifs de ressort poussent les clapets (28) dans leur position de départ.

6. Diffuseur d'air selon l'une quelconque des revendications 1 à 5, dans lequel les clapets (28) présentent un bras de pivotement qui dépasse des clapets (28).

7. Diffuseur d'air selon l'une quelconque des revendications 1 à 6, dans lequel l'au moins un élément de commande présente au moins un biseau d'attaque (42) ou une section de courbe et une section (46) s'étendant de manière parallèle par rapport à une surface de base.

8. Diffuseur d'air selon la revendication 7, dans lequel un bras de pivotement est disposé vers un clapet (28) en direction de l'extérieur selon un angle supérieur à 90° et l'espacement entre les biseaux d'attaque (42) ou les sections de courbes de deux éléments de commande au niveau d'un organe de commande de forme annulaire, au niveau duquel les éléments de commande sont disposés, est égal à soixante-seize degrés.

9. Diffuseur d'air selon l'une quelconque des revendications 1 à 8, dans lequel
- le canal d'air principal présente une section transversale de forme circulaire et les sections (19) se faisant face forment un rétrécissement périphérique dans le canal d'air principal, et
- au moins quatre canaux d'air (15) entourent le canal d'air principal et débouchent dans le canal d'air principal par l'intermédiaire d'ouvertures de sortie.

10. Diffuseur d'air selon l'une quelconque des revendications 1 à 9, dans lequel l'unité d'entraînement (20) présente un moteur électrique.
